# EUROPEAN PATENT SPECIFICATION

(11) **EP 2 049 382 B1**
(45) Date of publication and mention of the grant of the patent: **22.02.2012**
(21) Application number: 06769598.1
(22) Date of filing: 07.08.2006
(51) Int. Cl.: B62D 1/19

(54) **CONNECTION DEVICE FOR STEERING COLUMN AND CROSSBEAM**
VERBINDUNGSVORRICHTUNG FÜR LENKSÄULE UND QUERTRÄGER
DISPOSITIF DE CONNEXION POUR COLONNE DE DIRECTION ET TRAVERSE

(43) Date of publication of application: 22.04.2009
(73) Proprietor: Autoliv Development AB, 447 83 Vårgårda (SE)
(72) Inventor: KRUSE, Dion, 441 33 Alingsås (SE)
(74) Representative: Nilsson, Lars-Magnus
(86) International application number: PCT/SE2006/000930
(87) International publication number: WO 2008/018818

(56) References cited:
- EP-A- 0 448 246
- WO-A-01/17842
- US-A- 3 815 437
- US-A- 5 664 823

## Description

### Technical field

The present invention reflates to a connection device for connection of a steering wheel column to a crossbeam in a motor vehicles.

### Background of the invention

The above mentioned arrangement is previously known. Generally, the steering wheel column is attached to a support structure which is rigidly secured to the vehicle frame structure. US 5,819,592 discloses an arrangement in which the steering column is released from its supporting structure in response to collapse of the steering column. Such a collapse appears when the driver applies a force on the steering wheel in a frontal impact.

EP0448246 discloses steering column assemblies, particularly for vehicles having a passive impact restraining collapsible system.

DE 10053185 discloses an inflation device connected to an inflatable device and has one or more operable, pyrotechnical fasteners connected between the inflatable device and a vehicle part to block forward movement in the inflatable device while not active.

In frontal and oblique impacts the structure of the vehicle is normally deformed. In impacts with vehicle structure deformation there is a risk that the steering wheel column is moved in a direction towards the passenger compartment, which may cause injuries to the driver or other vehicle occupants. Thus, there is a need to further improve the safety, especially in a variety of impacts. Additionally, with respect to previously known solutions, it is desirable to achieve a space efficient arrangement not being bulky and complex.

### Summary of the invention

An object of the present invention is to provide an improved steering wheel column arrangement which reduces at least some of the above problems.

In one aspect of the present invention, a connection device according to the introduction is further characterized in that said crossbeam is releasably arranged in said connection to allow movement backwards relative the steering wheel column when said crossbeam being moved in a direction towards the passenger compartment due to deformation of the vehicle structure in an impact.

Preferably, the connection device is arranged between the steering wheel column and the crossbeam. In normal driving conditions the steering wheel column is supported by the crossbeam. However, in response to crossbeam movement caused by vehicle structure deformation in an impact, the crossbeam is at least partly releasably movable backwards relative the steering wheel column. That is, crossbeam movement in a direction towards the passenger compartment in an impact will not force the steering wheel column towards the driver or other occupants. Thus, the present invention may reduce the risk for injuries to the occupants by preventing steering column intrusion in a variety of impact situations, such as frontal, more specifically full frontal, overlap, more specifically small overlap, and oblique impacts. The connection device is adapted to prevent movement of a steering wheel column in a direction towards the passenger compartment in such impacts.

By the expression "crossbeam" is meant a structural part that is transversely mounted to reinforce the vehicle structure. For instance, a crossbeam may be mounted between side components of the vehicle structure, such as the A-pillars.

The crossbeam is often used for fastening points for the dashboard and the steering wheel column etc. Generally, in prior art the steering wheel column is essentially rigidly fastened to the crossbeam. In an impact situation the crossbeam may be moved towards the passenger compartment due to for instance A-pillar motion or firewall intrusion. Consequently, the steering column and thereby the steering wheel will be moved in a direction towards the driver due to the essentially rigid connection, which may cause injuries to the occupants. Especially in small overlap and oblique impacts, large displacement of the steering wheel column is common. There are arrangements in which the steering column is released from the support structure. However, such devices are designed to prevent the steering column to rise when it collapses. That is, the steering column is released in the event of a longitudinal forward collapse of the steering column caused by forces of the driver against the steering wheel in a frontal impact.

The crossbeam is preferably releasably arranged by means of a breakable fastening means. Thus, when the crossbeam starts to turn or twist in direction to the driver in an impact the fastening means, that normally connects the steering column to the crossbeam, is broken, whereby the crossbeam is movable backwards relative the steering wheel column.

In an overlap impact there is an offset between the vehicles. By the expression "small overlap" impacts is meant impacts in which preferably less than 45% of the width of the cars overlap each other, more preferably less than 40% of the width of the cars overlap each other and most preferably less than 30% of the width of the cars overlap each other.

The breakable fastening means is preferably adapted to break at a predetermined force. Thus, the strength of the connection between the crossbeam and the steering column is adapted to allow the crossbeam to be released in response to a force that would result in steering column intrusion in the case of a essentially rigid connection.

In order to release the crossbeam in response to a crash impulse the crossbeam may be arranged to be released by means of an active element, such as a pyrotechnical bolt.

According to the present invention the connection device between the crossbeam and the steering column may be fastened to the front part of the vehicle frame structure by means of a collapsible element, such as a bellow. The collapsible element is preferably adapted to be deformed at a predetermined force. Thus, when for instance the firewall is deformed in a frontal impact, the collapsible element is deformed in a controlled way preventing movement of the steering wheel column towards the driver.

The connection device has preferably a receiving portion adapted to at least partly enclose a connection portion of said crossbeam. Thus, due to the geometry of the connection device, movement of the crossbeam relative the steering wheel column is allowed.

The connection device is preferably arranged to define a passage to allow said movement backwards of said crossbeam. Thus, movement of the crossbeam relative the steering wheel column in a predetermined direction is allowed.

The profile of the receiving portion may be essentially U-shaped and arranged with its open end in a direction towards the passenger compartment to at least partly enclose the crossbeam. Thus, the receiving portion partly encloses the crossbeam and movement of the crossbeam in direction towards the open end of said U-shaped portion is thereby allowed.

The crossbeam may be adapted to be at least partly released relatively said steering column by activation from a crash system, such as an in-crash or a pre-crash system. Thus, adaptively activation of the release or at least preparation for a release of the crossbeam is possible.

### Brief description of the drawings

The present invention will now be described in more detail with the reference to the accompanying schematic drawings which show a preferred embodiment of the invention and in which:
Fig. 1 shows a perspective view of a vehicle.
Fig. 2 shows a perspective view of a vehicle structure provided with a connection device according to an embodiment of the present invention.
Fig. 3 shows a section view of the connection device shown in fig. 2.
Fig. 4a shows a top view of the vehicle structure shown in fig. 2.
Fig. 4b shows the deformation of the vehicle structure shown in fig. 4a in a small overlap impact.
Fig. 4c shows the deformation of the vehicle structure shown in fig. 4a in an essentially full frontal impact.

### Detailed description of a preferred embodiment

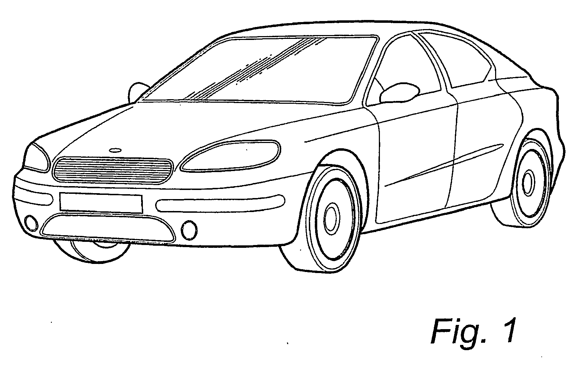

Fig. 1 shows a vehicle in which an embodiment according to the present invention may be fitted to support the steering wheel column.

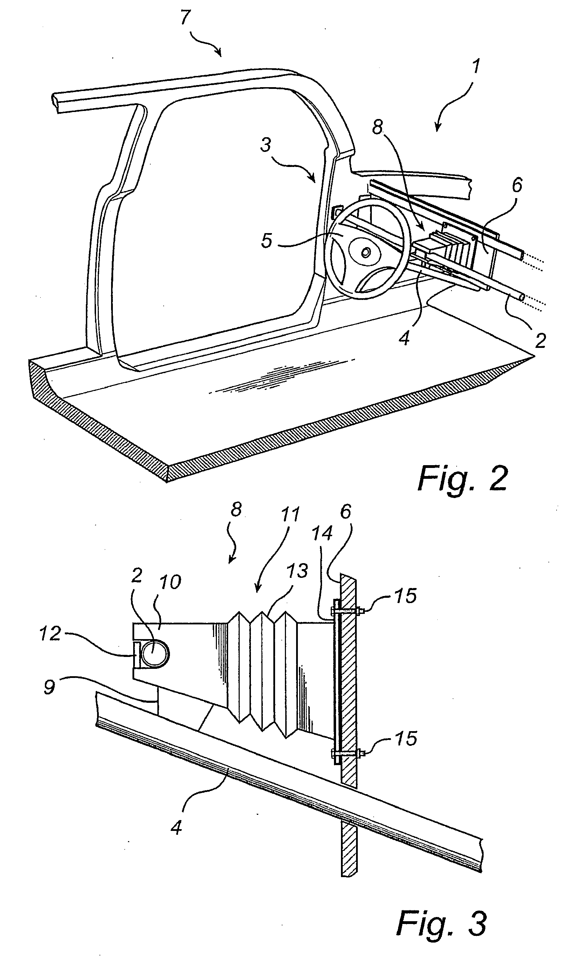

Fig. 2 shows a part of a vehicle frame structure 1 having a crossbeam 2 which is mounted to the side components 3, in this case the A-pillars, of the vehicle structure 1. The crossbeam 2 reinforces the vehicle structure 1 and is adapted to support the steering wheel column 4. At the upper end of the steering wheel column 4 a steering wheel 5 is arranged. The steering wheel column 4 may be collapsible and the steering wheel 5 may be fitted with a driver airbag module according to solutions known in the art. Furthermore, the vehicle structure 1 has a firewall 6 transversally arranged between the passenger compartment structure 7 and the engine compartment (not shown). The steering wheel column 4 is connected to the crossbeam 2 by a connection device 8 according to an embodiment of the present invention.

Fig. 3 shows a connection device 8 having a bridging portion 9, a receiving portion 10 and an energy absorbing portion 11. The bridging portion 9 is fastened to the steering wheel column 4 by welding. Alternatively, it may be fastened by means of bolts and nuts or similar attachment means. The profile of the receiving portion 10 may be U-shaped to partly enclose the crossbeam 2. Alternatively, the receiving portion may have other forms for connecting or clamping the crossbeam. The open end of the receiving portion 10 is arranged in a direction towards the passenger compartment to allow movement of the crossbeam 2 relative the steering wheel column 4 in an impact. In normal driving conditions this relative movement is prevented by a releasable fastening means 12, which according to this embodiment is a bolt, that is fastened to the receiving portion 10. The bolt is adapted to be releasable when the crossbeam 2 starts to move, in direction towards the passenger compartment, in response to an impact. When the bolt is released movement of the crossbeam 2, without forcing the steering wheel column 4 towards the driver, is possible. According to the invention, releasable fastening means is an active element such as one of a pyrotechnical bolt, a gas driven piston or an electro magnetic solenoid. Preferably such an active element may be activated in response to an in-crash based sensor system. Alternatively or additionally, the active element may be activated in response to a pre-crash based sensor system.

The energy absorbing portion 11 may comprise a collapsible element, which in this case is formed by an energy absorbing bellow 13, as seen in fig. 3. Alternatively, the collapsible element may for instance be one of a spring, a telescopic element or a gas piston. The right end of the energy absorbing portion 11 has a flange 14, which is fastened to the front part of the frame structure, in this case the firewall 6, by bolts and nuts 15. Alternatively, the energy absorbing portion may for instance be fastened to the front frame structure by welding. The collapsible element 11 may be adapted to be deformed at a certain load in case a force is applied to the firewall. For instance, such a force is applied when the engine is moved towards the firewall in response to a frontal end collision.

In normal driving conditions the connection between the steering column and the crossbeam is strong enough to support the steering wheel column.

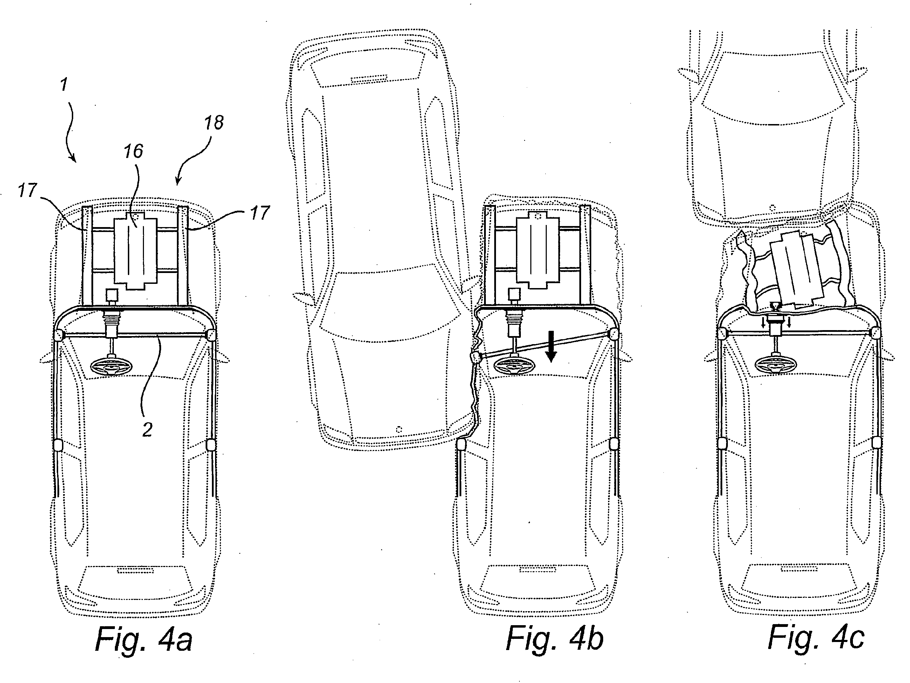

Fig. 4a shows a vehicle structure 1 having an engine 16 and longitudinal load structures 17 in the engine compartment 18. The longitudinal load structures 17 are designed to be deformed, and thereby absorb energy, in a frontal end collision. The longitudinal load structures 17 are connected to the passenger compartment structure via the firewall, which is transversally arranged between the engine compartment and the passenger compartment.

The deformation in a small overlap impact could be described as in fig. 4b. The left fender and front wheel of the vehicle structure 1 are displaced and the passenger compartment is deformed in the lower A-pillar region. The longitudinal load carrying structures in the front are not engaged to absorb energy and the deformation is large and focused to a small impact area. When the A-pillar is deformed, at least a part of the crossbeam is moved in a direction towards the passenger compartment as shown schematically by the arrow in fig. 4b. In the embodiment the crossbeam is moveable relative the steering column, which prevents that also the steering column is being displaced. By preventing steering column intrusion the risk for injuries, such as head and chest injuries, to the vehicle occupants is reduced.

The deformation of the vehicle structure 1 in an essentially full frontal impact could be described as in fig. 4c. The longitudinal load structures are deformed and the engine is moved in a direction towards the firewall, which intrudes into the passenger compartment. The collapsible energy absorbing element between the crossbeam and the firewall is deformed at a certain force from the firewall. Thus, the collapsible element is deformed in a controlled way and prevents motion of the steering column towards the driver. The arrows in fig. 4c indicates the direction in which the collapsible element is deformed. By preventing steering wheel column intrusion into the passenger compartment caused by firewall intrusion the risk for chest and head injuries to the occupants is reduced also in essentially full frontal impacts.

It will be appreciated that the described embodiment of the invention can be modified and varied by a person skilled in the art without departing from the inventive concept defined in the claims.

For instance the releasing function that releases the connection between the steering column and the crossbeam may be provided by other mechanical or electromechanical elements or connections, such as an electromagnetic arrangement. The release function between the crossbeam and the steering wheel column may be achieved without a breakable element, for instance by connecting the receiving portion to the crossbeam by means of a releasable clamp connection.

In the described embodiment the connection device is fastened to the steering wheel column and the crossbeam is releasable from the connection device. Alternatively, the connection device may be fastened to the crossbeam and the steering wheel column may be releasably arranged to the connection device. The connection device may also be adapted to be at least partly separated, for instance in two or more parts, to release the crossbeam from the steering column.

Furthermore, the connection device may be connected to structural parts having similar functions as the crossbeam to support the steering wheel column. For instance, the connection device may alternatively or additionally be releasably connected to a dashboard or to the structure supporting the dashboard. In such a case the connection device may be fitted in vehicles where the dashboard or other supporting structure has the function of a crossbeam.

Additionally, it may be possible to release the steering wheel column due to a force from the driver in an impact situation. Such a case may occur when the steering wheel column has collapsed and additional forces need to be absorbed.

As described, the crossbeam may be released upon a pre-crash signal. The release mechanism may in that case be at least partly reversible to provide a reset of the connection between the steering wheel column and the crossbeam.

## Claims

1. A motor vehicle comprising a connection device (8) for connection of a steering wheel column (4) and a crossbeam (2),
**characterised in that** said crossbeam (2) is releasably arranged in said connection to allow movement backwards relative to the steering wheel column (4) when said crossbeam (2) is moved in a direction towards the passenger compartment (7) due to deformation of the vehicle structure in an impact and **in that** said cross beam (2) is arranged to be released by means of an active element, such as a pyrotechnical bolt.

2. The motor vehicle according to claim 1, wherein the connection device (8) is fastened to the front part of the vehicle frame structure via a collapsible element (11).

3. The motor vehicle according to any one of the preceding claims, wherein the connection device (8) has a receiving portion (10) adapted to at least partly enclose a connection portion of said crossbeam (2).

4. The motor vehicle according to any one of the preceding claims, wherein the connection device (8) is arranged to define a passage to allow said movement backwards of said crossbeam (2).

5. The motor vehicle according to claim 3, wherein the profile of said receiving portion (10) is essentially U-shaped and arranged with its open end in direction towards the passenger compartment.

6. The motor vehicle according to any one of the preceding claims, wherein the crossbeam (2) is adapted to be at least partly released relatively said steering wheel column (4) by activation from a crash system, such as an in-crash or a pre-crash system.

## Patentansprüche

1. Kraftfahrzeug, welches eine Verbindungsvorrichtung (8) zur Verbindung einer Lenksäule (4) und eines Querträgers (2) umfasst,
**dadurch gekennzeichnet, dass** der Querträger (2) in der Verbindung lösbar angeordnet ist, um eine Rückwärtsbewegung bezüglich der Lenksäule (4) zu ermöglichen, wenn der Querträger (2) infolge einer Verformung der Fahrzeugstruktur bei einem Aufprall in einer Richtung zum Fahrgastraum (7) bewegt wird, und dadurch, dass der Querträger (2) dafür eingerichtet ist, mittels eines aktiven Elements wie etwa eines Pyrobolzens gelöst zu werden.

2. Kraftfahrzeug nach Anspruch 1, wobei die Verbindungsvorrichtung (8) am vorderen Teil der Fahrzeugrahmenstruktur über ein zusammendrückbares Element (11) befestigt ist.

3. Kraftfahrzeug nach einem der vorhergehenden Ansprüche, wobei die Verbindungsvorrichtung (8) einen Aufnahmeabschnitt (10) aufweist, der dazu eingerichtet ist, einen Verbindungsabschnitt des Querträgers (2) wenigstens teilweise zu umschließen.

4. Kraftfahrzeug nach einem der vorhergehenden Ansprüche, wobei die Verbindungsvorrichtung (8) dafür eingerichtet ist, einen Durchgang zu definieren, um die Rückwärtsbewegung des Querträgers (2) zu ermöglichen.

5. Kraftfahrzeug nach Anspruch 3, wobei das Profil des Aufnahmeabschnitts (10) im Wesentlichen U-förmig und mit seinem offenen Ende in Richtung zum Fahrgastraum angeordnet ist.

6. Kraftfahrzeug nach einem der vorhergehenden Ansprüche, wobei der Querträger (2) dazu eingerichtet ist, durch Aktivierung durch ein Crashsystem, wie etwa ein In-Crash- oder ein Pre-Crash-System, wenigstens teilweise bezüglich der Lenksäule (4) gelöst zu werden.

## Revendications

1. Véhicule à moteur comprenant un dispositif de connexion (8) pour connecter une colonne de direction (4) et une traverse (2),
**caractérisé en ce que** ladite traverse (2) est disposée de manière réversible dans ladite connexion pour permettre un mouvement vers l'arrière par rapport à la colonne de direction (4) quand ladite traverse (2) est en train d'être déplacée dans une direction orientée vers le compartiment passager (7) en raison d'une déformation de la structure du véhicule dans un impact et **en ce que** ladite traverse (2) est disposée afin d'être débloquée au moyen d'un élément actif, comme un boulon pyrotechnique.

2. Véhicule à moteur selon la revendication 1, dans lequel le dispositif de connexion (8) est fixé à la partie avant de la structure de châssis du véhicule via un élément affaissable (11).

3. Véhicule à moteur selon une quelconque des revendications précédentes, dans lequel le dispositif de connexion (8) comporte une portion de réception (10) adaptée pour au moins partiellement renfermer une portion de connexion de ladite traverse (2).

4. Véhicule à moteur selon une quelconque des revendications précédentes, dans lequel le dispositif de connexion (8) est agencé pour définit un passage pour permettre ledit mouvement vers l'arrière de ladite traverse (2).

5. Véhicule à moteur selon la revendication 3, dans lequel le profilé de ladite portion de réception (10) est essentiellement en forme de U et agencé avec son extrémité ouverte dans la direction orientée vers le compartiment passager.

6. Véhicule à moteur selon une quelconque des revendications précédentes, dans lequel la traverse (2) est adaptée pour être au moins partiellement débloquée par rapport à ladite colonne de direction (4) par activation depuis un système de prévention des collisions, comme un système en cours de collision ou pré-collision.
